# FASCICULE DE BREVET EUROPEEN

(11) **EP 3 906 992 B1**
(45) Date de publication et mention de la délivrance du brevet: **01.07.2026**
(21) Numéro de dépôt: 21172224.4
(22) Date de dépôt: 05.05.2021
(51) Int. Cl.: B01D 47/02, F01N 3/04, F16D 65/00

(54) **DISPOSITIF DE COLLECTE DE PARTICULES ET VÉHICULE ÉQUIPÉ D'UN TEL DISPOSITIF**
VORRICHTUNG ZUM SAMMELN VON PARTIKELN UND MIT EINER SOLCHEN VORRICHTUNG AUSGESTATTETES FAHRZEUG
PARTICLE COLLECTING DEVICE AND VEHICLE EQUIPPED WITH SUCH A DEVICE

(30) Priorité: 07.05.2020 FR 2004548
(43) Date de publication de la demande: 10.11.2021
(73) Titulaire: ALSTOM Holdings, 93400 Saint-Ouen-sur-Seine (FR); Université Polytechnique Hauts-de-France, 59313 Valenciennes (FR); Centre national de la recherche scientifique, 75016 Paris (FR)
(72) Inventeur: OCTAU, Charlène, Aline, Françoise, 59300 VALENCIENNES (FR); MERESSE, Damien, Laurent, Henri, 59111 HORDAIN (FR); WATREMEZ, Michel, 59296 AVESNES-LE-SEC (FR)
(74) Mandataire: Plasseraud IP

(56) Documents cités:
- EP-A2- 1 122 105
- WO-A1-2019/025991
- FR-A1- 2 754 467
- FR-A1- 3 070 872
- US-A- 3 566 583
- US-A- 4 924 672
- US-A1- 2004 255 786

## Description

La présente invention concerne un dispositif de collecte de particules en suspension dans l'atmosphère destiné à équiper un véhicule. La présente invention concerne également un véhicule comportant un tel dispositif de collecte.

Le fonctionnement de nombreux types de véhicules implique l'émission ou le relargage dans l'atmosphère de particules de tailles variées. Par exemple, les gaz d'échappement de certains moteurs comprennent des particules solides résultant de la combustion d'un carburant. En outre, les systèmes de freinage utilisés dans ces véhicules utilisent fréquemment le frottement de deux pièces l'une sur l'autre pour dissiper l'énergie cinétique du véhicule. Le frottement est alors également la cause du relargage de particules dans l'atmosphère.

La présence de telles particules dans l'atmosphère est susceptible de susciter un grand nombre de pathologies chez des personnes inhalant ces particules. Cela est d'autant plus marqué que la concentration en particules est élevée. En conséquence, les systèmes de transport en milieu confiné, notamment les métros, sont particulièrement sensibles à ces effets, puisque l'air est moins renouvelé dans les tunnels qu'à la surface.

Il est également notable que la taille des particules générées soit par la combustion de carburants soit par le freinage est susceptible de varier, et notamment d'être très petite. Or, les particules très fines sont susceptibles de pénétrer très profondément dans les poumons et d'y causer de nombreuses pathologies.

En particulier, des particules très fines de type PM 10 ou PM 2,5, c'est-à-dire présentant un diamètre inférieur ou égal à 10 micromètres (µm) ou 2,5 µm respectivement, sont difficiles à piéger grâce à des filtres, puisque les filtres capables de retenir de si petites particules ont tendance à se boucher facilement. Un entretien régulier du filtre est donc nécessaire pour en maintenir l'efficacité au cours du temps, ce qui est difficile lorsque le filtre fait partie d'un dispositif embarqué dans un véhicule.

En outre, le passage de l'air à travers des filtres présentant des mailles de très petites taille induit des pertes de charge importantes, et l'efficacité de l'aspiration est donc limitée. Cela est d'autant plus marqué lorsque le filtre est partiellement bouché, ce qui arrive très rapidement du fait de la petite taille des mailles. Toutefois, même un filtre neuf et propre présente un obstacle non négligeable au passage de l'air. Un système de collecte de particules de très petite taille utilisant un filtre est donc gourmand en énergie. Lorsque le dispositif de collecte des particules est embarqué dans un véhicule, cela est problématique puisque la quantité d'énergie disponible est limitée. FR 3 070 872 A1 mentionne un dispositif de récupération de particules émises par un système de freinage d'un véhicule automobile, comportant une canalisation d'entrée (8) de réception d'un flux d'air chargé en particules, et un bocal (2) contenant un liquide (6) de récupération de particules.

Il existe donc un besoin pour un système de collecte de particules en suspension dans l'atmosphère, destiné à être installé dans un véhicule, qui soit capable de collecter des particules de très petite taille tout en nécessitant peu d'entretien et en étant peu gourmand en énergie.

A cet effet, il est proposé un véhicule de transport, selon la revendication 1.

Selon des modes de réalisation particuliers, le véhicule présente une ou plusieurs des caractéristiques suivantes prise(s) isolément ou selon toutes les combinaisons techniquement possibles :
- le réservoir comporte, en outre, une ouverture de retour du condensat, l'ouverture de retour étant distincte de la sortie, l'organe de protection comportant un conduit de retour configuré pour conduire le condensat jusqu'au réservoir via l'ouverture de retour.
- le conduit de retour comporte un clapet configuré pour empêcher un fluide de circuler depuis le réservoir jusqu'au condenseur dans le conduit de retour.
- l'organe de protection comporte, en outre, un filtre configuré pour retenir des particules présentes dans le flux d'air, le filtre étant interposé entre le condenseur et le dispositif d'aspiration lorsque l'organe de protection est connecté au dispositif d'aspiration.
- la barrière comporte une grille, la grille délimitant notamment des ouvertures présentant une aire comprise entre 0,5 millimètre carré et 2 millimètres carrés.
- la barrière divise une chambre du réservoir en un premier compartiment et un deuxième compartiment, le premier compartiment étant configuré pour accueillir le liquide, la sortie débouchant dans le deuxième compartiment, la barrière délimitant un passage reliant le premier compartiment au deuxième compartiment et configuré pour être traversé par le flux d'air.
- l'organe de protection comporte un conduit d'aspiration destiné à relier l'organe de protection au dispositif d'aspiration, le conduit d'aspiration comportant un clapet configuré pour empêcher un flux d'air de circuler à travers le clapet depuis le dispositif d'aspiration jusqu'à l'organe de protection.
- le liquide est une solution aqueuse, la solution contenant notamment un tensio-actif.
- le réservoir comporte au moins deux chambres connectées en série, chaque chambre contenant du liquide, l'organe de collecte étant configuré pour injecter le flux d'air de collecte dans le liquide contenu dans l'une des chambres, la sortie débouchant dans une autre chambre.
- le véhicule comporte un circuit pneumatique et un frein, le circuit pneumatique étant configuré pour commander un freinage du véhicule par le frein, le dispositif d'aspiration étant configuré pour être actionné par le circuit pneumatique.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une représentation schématique d'un véhicule comportant un dispositif de collecte de particules selon l'invention,
[Fig 2] la figure 2 est une représentation schématique d'un premier exemple de dispositif de collecte de particules de la figure 1, et
[Fig. 3] la figure 3 est une représentation schématique d'un deuxième exemple de dispositif de collecte de particules de la figure 1.

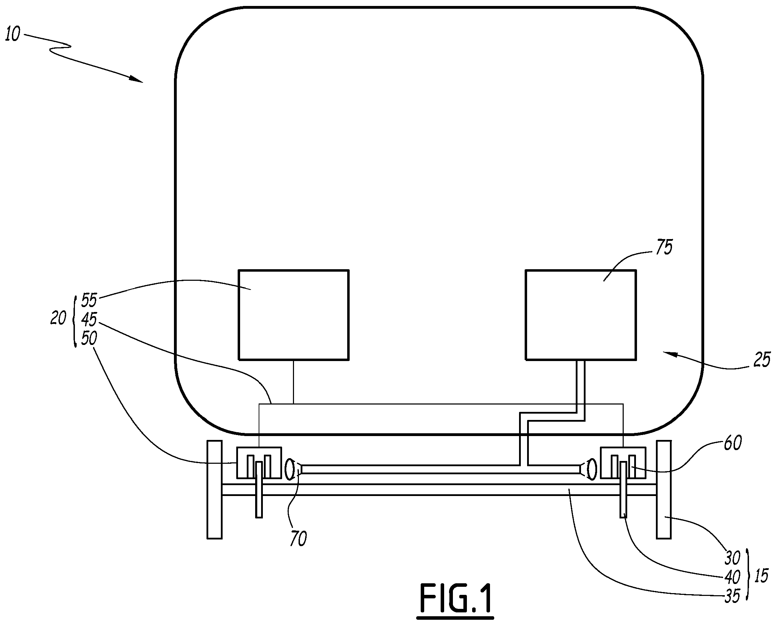

Un véhicule 10 est représenté schématiquement sur la figure 1.

Le véhicule 10 est, par exemple, un véhicule de transport en commun, en particulier un véhicule ferroviaire tel qu'un train, un tramway, un métro ou une voiture formant une partie d'un tel train, tramway ou métro. En variante, le véhicule 10 est un véhicule terrestre tel qu'un bus ou un trolleybus, ou encore un véhicule individuel.

Le véhicule 10 comporte au moins un essieu 15, un système de freinage 20 et un dispositif 25 de collecte.

De manière connue en soi, chaque essieu 15 comporte au moins deux roues 30 reliées par un arbre 35, au moins un disque 40, également appelé disque de frein, par exemple deux disques 40, étant monté(s) sur l'arbre 35.

Chaque disque 40 est solidaire de l'arbre 35 correspondant.

Le système de freinage 20 comporte un circuit pneumatique 45 et au moins un frein 50, notamment un frein 50 pour chacun des disques 40.

Le circuit pneumatique 45 est configuré pour commander un freinage du véhicule 10 par le ou les freins 50. En particulier, le circuit pneumatique 45 est configuré pour fournir à chaque frein 50 une pression propre à actionner le frein 50 de manière à entraîner un freinage du véhicule 10 par le frein 50.

Il est à noter que des variantes dans lesquelles les freins 50 sont actionnés électriquement ou hydrauliquement sont également envisageables.

Le circuit pneumatique 45 comporte notamment un dispositif 55 de commande de freinage. Ce dispositif de commande 55 est configuré pour générer un flux d'air sous pression et pour transmettre le flux d'air, via un ensemble de conduits, à chaque frein 50.

Chaque frein 50 est configuré pour exercer sur le disque 40 correspondant une force tendant à empêcher le disque 40 de pivoter sur lui-même. En particulier, chaque frein 50 comporte au moins une plaquette 60 configurée pour frotter contre le disque 40 de manière à empêcher ou ralentir une rotation du disque 40.

En particulier, le frein 50 est configuré pour déplacer chaque plaquette 60, sous l'effet de la pression transmise par le circuit pneumatique 45, entre une position dans laquelle la plaquette 60 n'est pas en contact avec le disque 40 correspondant et une position dans laquelle la plaquette 60 est en appui contre le disque 40.

Le dispositif de collecte 25 est configuré pour collecter des particules en suspension dans l'atmosphère, en particulier dans l'atmosphère entourant le véhicule 10.

Le dispositif de collecte 25 est ici configuré pour collecter des particules en suspension émises lors d'un freinage du véhicule 10, les particules résultant de l'usure d'un disque 40 et/ou d'une plaquette 60 lorsque la plaquette 60 frotte contre le disque 40.

Il est à noter que le dispositif de collecte 25 est également susceptible d'être utilisé pour collecter d'autres types de particules, par exemple en modifiant le positionnement de tout ou partie du dispositif de collecte 25 dans le véhicule 10.

Chaque particule présente une dimension maximale inférieure ou égale à 100 µm, par exemple inférieure ou égale à 50 µm, notamment inférieure ou égale à 10 µm, en particulier inférieure ou égale à 2,5 µm.

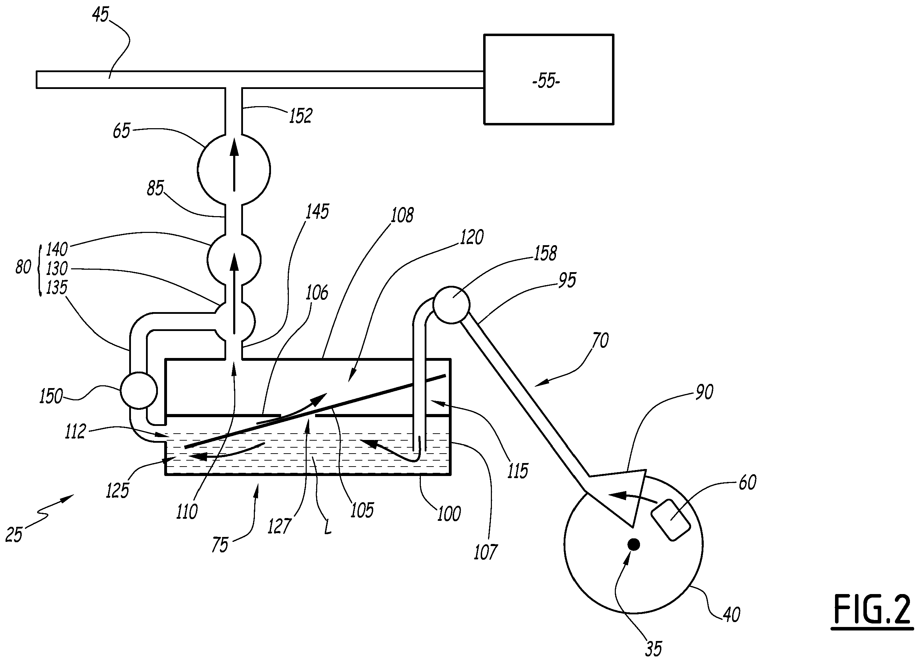

Un premier exemple de dispositif de collecte 25 est représenté sur la figure 2.

Le dispositif de collecte 25 comporte un dispositif d'aspiration 65, un organe de collecte 70, un réservoir 75 et un organe de protection 80.

Le dispositif d'aspiration 65 est configuré pour générer un flux d'air de collecte. En particulier, le dispositif d'aspiration 65 est configuré pour aspirer un flux d'air de collecte.

Le dispositif d'aspiration 65, l'organe de collecte 70, le réservoir 75 et l'organe de protection 80 sont configurés pour conduire le flux d'air de collecte depuis l'extérieur du dispositif de collecte 25, notamment depuis l'extérieur du véhicule 10, jusqu'au dispositif d'aspiration 65.

En particulier, le dispositif d'aspiration 65, l'organe de collecte 70, le réservoir 75 et l'organe de protection 80 sont configurés pour que le flux d'air de collecte traverse, dans cet ordre, l'organe de collecte 70, le réservoir 75 et l'organe de protection 80, pour atteindre le dispositif d'aspiration 65. Cela est indiqué par des flèches sur la figure 2.

Ainsi, le dispositif d'aspiration 65 est relié à l'organe de protection 80, par exemple par un conduit d'aspiration 85.

Optionnellement, le conduit d'aspiration 85 comporte un clapet configuré pour permettre au flux d'air de collecte de circuler à travers le clapet depuis l'organe de protection 80 jusqu'au dispositif d'aspiration 65, et pour empêcher un flux d'air de circuler depuis le dispositif d'aspiration 65 jusqu'à l'organe de protection 80. Le clapet peut être placé sur le conduit d'aspiration 85 entre l'organe de protection 80 et le dispositif d'aspiration 65 mais aussi, optionnellement, entre le dispositif d'aspiration 65 et le circuit pneumatique 45.

Le dispositif d'aspiration 65, est, par exemple, configuré pour être actionné par le circuit pneumatique 45. Dans ce cas, le dispositif d'aspiration 65 est relié au circuit pneumatique 45 par un conduit 152.

Selon un mode de réalisation, le dispositif d'aspiration 65 comporte une turbine propre à générer le flux d'air de collecte lorsque la turbine est actionnée par le flux d'air sous pression circulant dans le circuit pneumatique.

En variante, le dispositif d'aspiration 65 est configuré pour générer le flux d'air de collecte par effet Venturi. Par exemple, le dispositif d'aspiration 65 est relié par le conduit 152 à une zone du circuit pneumatique 45 dans laquelle une réduction locale du diamètre du circuit 45 entraîne une diminution locale de la pression. Le flux d'air de collecte est alors aspiré et injecté dans le flux d'air sous pression.

Il est à noter que de nombreux types de dispositifs d'aspiration 65 sont susceptibles d'être utilisés. En particulier, de nombreux types de dispositifs d'aspiration 65 sont actionnables par un circuit pneumatique 45 et entraînent l'injection du flux d'air de collecte dans le circuit pneumatique 45Par exemple, le dispositif d'aspiration est une pompe à vide pneumatique, hydraulique ou électrique.

En option, un refroidisseur est configuré pour refroidir le flux d'air qui circule dans le conduit 152 depuis le dispositif d'aspiration 65, avant que le flux d'air ne circule dans le circuit pneumatique 45.

Dans d'autres modes de réalisation envisageables, le dispositif d'aspiration 65 est susceptible d'être déconnecté du circuit pneumatique 45, par exemple si le dispositif d'aspiration 65 est actionné électriquement ou par un moyen non pneumatique.

Le flux d'air de collecte contient un ensemble de particules que le dispositif de collecte 25 est configuré pour collecter.

L'organe de collecte 70 est configuré pour collecter le flux d'air de collecte à l'extérieur du dispositif de collecte 25, notamment à l'extérieur du véhicule 10, et pour conduire le flux d'air de collecte jusqu'à l'intérieur du réservoir 75.

En particulier, l'organe de collecte 70 est configuré pour collecter des particules émises lors du freinage du véhicule 10, notamment pour que le flux d'air de collecte soit en contact avec une plaquette 60 et/ou avec un disque 40 avant de pénétrer dans l'organe de collecte 70.

L'organe de collecte 70 comporte, par exemple, un embout 90, un conduit de collecte 95, et un clapet 158.

L'embout 90 est configuré pour collecter le flux d'air de collecte et pour transmettre le flux d'air de collecte au conduit de collecte 95.

L'embout 90 est, par exemple, évasé à une de ses extrémités, cette extrémité étant ouverte et disposée à proximité du disque 40 et/ou d'au moins une plaquette 60 correspondante.

Le conduit de collecte 95 est configuré pour recevoir le flux d'air de collecte de l'embout 90 et pour conduire le flux d'air de collecte depuis l'embout 90 jusqu'à l'intérieur du réservoir 75. En particulier, le conduit de collecte 95 est configuré pour injecter le flux d'air de collecte dans le liquide L,

Le clapet 158 est configuré pour permettre au flux d'air de collecte de circuler au travers du clapet 158 depuis l'embout 90 jusqu'au réservoir 75 et pour empêcher le flux d'air de circuler, à travers le conduit de collecte 95, depuis le réservoir 75 jusqu'à l'embout 90. Le clapet 158 permet alors notamment d'éviter tout phénomène d'évaporation durant la période de non-utilisation du dispositif 25

Le réservoir 75 est configuré pour contenir un liquide L.

En particulier, le réservoir 75 est configuré pour contenir un volume de liquide L, ce volume de liquide L étant fonction des dimensions du frein et des périodicités de maintenance sur le dispositif de collecte 25.

Le réservoir 75, l'organe de collecte 70 et l'organe de protection 80 sont configurés pour que le flux d'air de collecte traverse le liquide L lorsque le flux d'air de collecte traverse le réservoir 75.

Il est entendu par « traverse le liquide L » que le flux d'air de collecte circule à travers au moins une partie du liquide L et est en contact avec le liquide L pendant cette circulation.

Par exemple, l'organe de collecte 70 est configuré pour injecter le flux d'air de collecte dans le liquide L. Pour cela, l'organe de collecte 70 est notamment configuré pour qu'une première extrémité du conduit de collecte 95 soit immergée dans le liquide L, une deuxième extrémité du conduit de collecte 95 étant prévue pour recevoir le flux d'air de collecte de l'embout 90, le flux d'air de collecte circulant dans le conduit de collecte depuis la deuxième extrémité jusqu'à la première extrémité.

Le réservoir 75 comporte, notamment, un boîtier 100 et une barrière 105.

Le boîtier 100 délimite une chambre destinée à contenir le liquide L.

Le boîtier 100 sépare l'extérieur du réservoir 75 de l'intérieur du réservoir 75. Le boîtier 100 est, par exemple, réalisé en un matériau métallique tel que l'acier inoxydable, ou en une matière plastique selon l'environnement du véhicule 10. Le matériau du boitier 100 est donc à adapter suivant l'environnement, en particulier, si le véhicule 10 circule dans des régions au climat extrême ou si d'autres équipements situés à proximité du dispositif de collecte 25 peuvent perturber son fonctionnement

Le boîtier 100 comporte au moins une face latérale 107 et au moins une face supérieure 108. La ou les face(s) latérale(s) 107 délimite(nt) le réservoir 75 dans un plan horizontal lorsque le véhicule 10 est en fonctionnement. La face supérieure 108 délimite le réservoir 75 selon une direction verticale lorsque le véhicule 10 est en fonctionnement.

Le boîtier 100 délimite au moins une sortie 110 du réservoir 75 et une ouverture de retour 112.

En outre, un orifice non représenté de remplissage et/ou de vidange du réservoir 75 est également ménagé dans le boîtier 100.

La sortie 110 est configurée pour permettre au flux d'air de collecte de circuler depuis le réservoir 75 jusqu'à l'organe de protection 80 en traversant la sortie 110.

La sortie 110 est disposée au-dessus du niveau de liquide L dans le réservoir 75. En d'autres termes, la sortie 110 n'est pas immergée dans le liquide L. Par exemple, la sortie 110 est ménagée dans la face supérieure 108 du boîtier 100.

L'ouverture de retour 112 est distincte de la sortie 110. Par exemple, l'ouverture de retour 112 est ménagée dans une face latérale 107.

La barrière 105 est configurée pour empêcher des projections du liquide L d'atteindre la sortie 110.

En outre, la barrière 105 est configurée pour permettre au flux d'air de collecte de traverser le réservoir 75 depuis l'organe de collecte 70 jusqu'à la sortie 110.

La barrière 105 comporte, par exemple, une plaque réalisée en un matériau métallique ou plastique. En variante, la barrière 105 comporte une grille délimitant une pluralité d'ouvertures. Les ouvertures présentent chacune une aire comprise, par exemple, entre 0,5 millimètre carré (mm²) et 2 mm², par exemple égale, à 10% près, à 1 mm².

Par exemple, la barrière 105 divise le réservoir 75 en un premier compartiment 115 et un deuxième compartiment 120 et délimite un passage 125 reliant le premier compartiment 115 au deuxième compartiment 120.

Le passage 125 est délimité par la barrière 105 et par une face latérale 107. Le passage 125 est prévu pour être traversé par le flux d'air de collecte.

La barrière 105 s'étend, par exemple, entre une première extrémité fixée à une paroi latérale 107 ou à la paroi supérieure 108 et une deuxième extrémité délimitant le passage 125.

La première extrémité est disposée à une hauteur supérieure à une hauteur de la deuxième extrémité, chaque hauteur étant mesurée selon une direction verticale à partir d'un unique plan horizontal.

Par exemple, la première extrémité est disposée au-dessus du niveau de liquide L et la deuxième extrémité est disposée en-dessous du niveau de liquide L. En d'autres termes, la première extrémité est émergée et la deuxième extrémité est immergée. Ainsi, le passage 125 est immergé dans le liquide L.

En option, la barrière 105 peut être complétée par une autre barrière 106.

La barrière 106 comporte, par exemple, deux plaques délimitant entre elles un passage 127. La barrière 105 s'étend à travers le passage 125. Ainsi, l'une des deux plaques de la barrière 106 est disposée dans l'un des compartiments 115,120, l'autre des deux plaques étant disposée dans l'autre compartiment 115, 120

La barrière 106 est interposée entre le liquide L et la sortie 110.

Les deux plaques de la barrière 106 s'étendent, par exemple, chacune d'une face latérale 107 à une autre face latérale 107, ces deux faces latérales 107 étant en regard l'une de l'autre.

En particulier, la barrière 106 est placée au-dessus de l'ouverture de retour 112 et est émergée du liquide L.

Les plaques de la barrière 106 sont, par exemple, horizontales lorsque le véhicule 10 est en fonctionnement sur un sol horizontal. En variante, les plaques de la barrière 106 sont chacune inclinées depuis une extrémité de la plaque en contact avec une face latérale 107 jusqu'à une autre extrémité délimitant le passage 127. Cela permet notamment au liquide L, qui pourrait être projeté lors du fonctionnement du véhicule, de retourner dans le fond du réservoir 75.

La barrière 106 est réalisée, par exemple, en un matériau métallique ou plastique.

Chaque plaque de la barrière 106 est, par exemple, une plaque pleine, en particulier non perforée. En variante, au moins l'une des plaques de la barrière 106 est perforée et délimite une pluralité d'ouvertures. En d'autres termes, la plaque considérée est une grille. Les ouvertures présentent chacune une aire comprise, par exemple, entre 0.5 millimètre carré (mm²) et 2 mm².

Le premier compartiment 115 est configuré pour accueillir au moins partiellement le liquide L.

L'organe de collecte 90 est configuré pour injecter le flux d'air de collecte dans le premier compartiment 115, notamment dans le liquide L contenu dans le premier compartiment 115.

Le deuxième compartiment 120 est au moins partiellement rempli d'air. En particulier, le deuxième compartiment 120 n'est pas entièrement rempli de liquide L.

La sortie 110 débouche dans le deuxième compartiment 120.

Ainsi, le réservoir 75 est configuré pour que le flux d'air de collecte circule successivement dans le premier compartiment 115 (notamment dans le liquide L contenu dans le premier compartiment 115), dans le passage 125, et dans le deuxième compartiment 120 pour atteindre la sortie 110.

Le liquide L est, par exemple, une solution aqueuse. En particulier, le liquide L contient un tensio-actif. Par exemple, le liquide L est un mélange d'eau et d'un tensio-actif.

Il est à noter que de nombreux types de liquides L sont susceptibles d'être utilisés.

Il est notamment entendu par « tensio-actif » un composé propre à modifier la tension de surface d'une interface entre l'air et l'eau, ou entre l'air et une solution aqueuse. Le terme de « tensio-actif » est parfois remplacé par les synonymes « surfactant » ou « agent de surface ».

Il est notamment entendu par « solution aqueuse » un liquide L contenant de l'eau, notamment un liquide L contenant, en masse, au moins 80 pourcents (%) d'eau, par exemple au moins 95 % d'eau.

L'organe de protection 80 est relié au dispositif d'aspiration 65 et est configuré pour conduire le flux d'air de collecte depuis la sortie 110 jusqu'au dispositif d'aspiration 65.

L'organe de protection 80 est configuré pour condenser une vapeur du liquide L présente dans le flux d'air de collecte et pour conduire le condensat généré jusqu'au réservoir 75.

L'organe de protection 80 comporte un condenseur 130 et un conduit de retour 135. En option, l'organe de protection 80 comprend, en outre, un filtre 140. En particulier, le filtre 140 est interposé entre le condenseur 130 et le dispositif d'aspiration 65, le condenseur 130 étant interposé entre le filtre 140 et la sortie 110 du réservoir 75.

Le condenseur 130 est configuré pour être traversé par le flux d'air de collecte et pour condenser la vapeur présente dans le flux d'air de collecte.

Le condenseur 130 est, par exemple, un condenseur à fluides séparés. Les condenseurs à fluides séparés sont des condenseurs comprenant un circuit de fluide réfrigérant, dans lesquels le flux d'air de collecte est séparé du fluide réfrigérant.

Le condenseur 130 est, par exemple, relié à la sortie 110 par un conduit 145. Le conduit 145 est distinct du conduit de retour 135.

Le condenseur 130 est, en outre, configuré pour injecter ou guider le condensat jusqu'au conduit de retour 135.

Le conduit de retour 135 relie le condenseur 130 à l'ouverture de retour 112. En particulier, le conduit de retour 135 est configuré pour conduire le condensat depuis le condenseur 130 jusqu'au réservoir 75 via l'ouverture de retour 112.

Le conduit de retour 135 comporte, par exemple, un clapet 150 configuré pour être traversé par le condensat lorsque le condensat circule depuis le condenseur 130 jusqu'au réservoir 75 et configuré pour empêcher un fluide, notamment le liquide L et/ou le flux d'air de collecte, de circuler dans le conduit de retour 135 depuis le réservoir 75 jusqu'au condenseur 130.

En option, un système de contrôle du niveau de liquide L dans le réservoir 75 ainsi qu'un réservoir d'appoint de liquide L peuvent être ajoutés pour maintenir le niveau de liquide L constant.

Le filtre 140 est configuré pour retenir des particules présentes dans le flux d'air de collecte. Par exemple, le filtre 140 comporte au moins une grille prévue pour être traversée par le flux d'air de collecte, les mailles de la grille présentant une dimension inférieure ou égale à la dimension maximale des particules.

Le filtre 140 est notamment configuré pour retenir des particules présentant une taille supérieure ou égale à 15 µm, par exemple supérieure ou égale à 40 µm.

Le fonctionnement du dispositif de collecte 25 va maintenant être décrit.

Le dispositif d'aspiration 65 génère une dépression qui entraine l'apparition du flux d'air de collecte.

Le flux d'air de collecte traverse successivement l'embout 90, le conduit de collecte 95, le réservoir 75, le conduit 145, le condenseur 130, le filtre 140 si celui-ci est présent, et le conduit d'aspiration 85 pour atteindre le dispositif d'aspiration 65.

Le flux d'air de collecte, puisqu'il est collecté à proximité d'une plaquette de frein 60, entraîne avec lui des particules émises pendant le freinage. En outre, le flux d'air de collecte entraîne avec lui naturellement tout autre type de particules en suspension dans l'air dans la zone proche de l'embout 90.

Le flux d'air de collecte est conduit par l'organe de collecte 70 jusqu'au réservoir 75. Dans le réservoir 75, le flux d'air de collecte traverse au moins partiellement le liquide L.

Les particules présentes dans le flux d'air de collecte sont majoritairement piégées dans le liquide L au cours de la traversée de celui-ci par le flux d'air de collecte.

Du fait de la présence de la barrière 105, le liquide L présent dans le réservoir n'atteint pas la sortie 110 même en cas de remous causés par le mouvement du véhicule 10 ou l'aspiration du dispositif 65. Cela évite donc que le liquide L soit aspiré jusqu'au condenseur 130 et/ou jusqu'au dispositif d'aspiration 65 et diminue donc le risque d'endommagement du dispositif d'aspiration 65 et/ou du circuit pneumatique 45 par le liquide L et avantageusement du filtre 140.

Le flux d'air de collecte rejoint alors le condenseur 130 via la sortie 110.

Il est à noter que le flux d'air de collecte présente, en sortie du réservoir 75, une fraction massique de vapeur du liquide L différente de zéro, puisque le flux d'air de collecte s'est chargé en vapeur lors de la traversée du liquide L. En outre, il arrive également fréquemment que le flux d'air de collecte contienne une fraction massique non nulle de vapeur lorsqu'il est collecté par l'organe de collecte 70. De même, en cas de forte chaleur, le flux d'air de collecte contient une fraction massique non nulle de vapeur lorsqu'il est contenu dans le réservoir 75.

Il est entendu par « fraction massique » un rapport entre, au dénominateur, une masse d'un volume du flux d'air de collecte et, au numérateur, la masse de la vapeur contenue dans le volume considéré.

La vapeur contenue dans le flux d'air de collecte est au moins partiellement condensée dans le condenseur 130. La vapeur condensée forme un condensat sous forme liquide.

En particulier, l'humidité spécifique de l'air en sortie de condenseur 130 doit être inférieure à 5 grammes d'eau par kilogramme d'air sec pour éviter la condensation dans le système pneumatique. Ceci correspond à une température de rosée de 4°C.

En sortie du condenseur 130, le condensat est conduit au réservoir 75 par le conduit de retour 135.

En sortie du condenseur 130, le flux d'air de collecte atteint le dispositif d'aspiration 65, qui injecte le flux d'air de collecte dans le circuit pneumatique 45.

Grâce à l'invention, les particules sont collectées sans qu'une perte de charge trop importante ait lieu. En effet, le liquide L piège efficacement les particules contenues dans le flux d'air de collecte sans entraîner une perte de charge importante. En outre, le liquide L peut aisément être changé lorsqu'il est saturé en particules, mais cette saturation est très lente à atteindre, notamment si le volume de liquide L est important.

Par ailleurs, la présence du condenseur 130 permet d'éviter que le niveau de liquide L dans le réservoir 75 diminue trop rapidement du fait de l'évaporation causée par le flux d'air de collecte. Ainsi, l'entretien du dispositif de collecte 25 reste limité.

La barrière 105 limite également les pertes de liquide L, et évite que la présence de liquide L en aval du réservoir 75 cause des pertes de charge trop importantes, ce qui limiterait l'efficacité énergétique du dispositif de collecte 25. En outre, le liquide L pourrait limiter l'efficacité du condenseur 130 s'il est présent en trop grande quantité.

L'utilisation d'une ouverture de retour 112 distincte de la sortie 110, et donc d'un conduit de retour 135 distinct du conduit 145, fait que le condensat ne circule pas dans le même conduit 145 que le flux d'air de collecte. Cela permet de réduire les pertes de charges que subit le flux d'air de collecte et ainsi d'augmenter l'efficacité énergétique du dispositif de collecte 25.

Le clapet 150 évite lui aussi que du liquide L atteigne le dispositif d'aspiration 65.

Le filtre 140, bien qu'optionnel, évite que des particules qui n'auraient pas été piégées par le liquide L atteignent le dispositif d'aspiration 65 et/ou le circuit pneumatique 45 et endommagent l'un ou l'autre.

Une barrière 105 séparant le réservoir en deux compartiments et délimitant un passage reliant ces deux compartiments bloque efficacement les projections venant de l'un des compartiments, et est facile à fabriquer et à mettre en place. En particulier, la barrière 105 peut alors prendre la forme d'une simple plaque ou d'une grille présentant des ouvertures dont l'aire est comprise entre 0.5 mm² et 2 mm².

La présence d'un clapet sur le conduit d'aspiration 85 ou en amont du dispositif d'aspiration 65 permet d'éviter que, par exemple en cas de dysfonctionnement du dispositif d'aspiration 65, un flux d'air ou de tout autre gaz circule depuis le dispositif d'aspiration 65 jusqu'à l'organe de collecte 70. Un tel flux aurait notamment comme conséquence de causer l'éjection d'une partie du liquide L hors du réservoir 75, voire hors du dispositif de collecte 25, et pourrait donc rendre ce dispositif 25 inefficace. En outre, la présence d'un clapet 158 sur le conduit de collecte 95 permet également d'empêcher l'éjection du liquide L ou la perte de vapeur de liquide L en cas de fortes chaleurs provoquées par la présence d'équipement à proximité du réservoir 75 ou par les conditions météorologiques.

L'utilisation d'une solution aqueuse comme liquide L facilite le remplacement du liquide L et évite la complexité inhérente à l'utilisation d'un autre type de liquide L qui serait plus difficile à produire, qu'il serait plus difficile de se procurer, ou qui serait polluant. La fabrication et la maintenance du dispositif de collecte 25 est donc facilitée.

Un tensio-actif permet de piéger plus efficacement les particules dans le liquide L en les agglomérant. Un tensio-actif peut notamment être un floculant.

L'utilisation du circuit pneumatique 45 pour actionner le dispositif d'aspiration 65 permet une plus grande simplicité du véhicule 10, puisqu'un tel circuit pneumatique est fréquemment déjà présent dans le véhicule 10. Cela permet en outre de ne pas ajouter d'équipement annexe qui alourdirait ou encombrerait le véhicule 10.

Il est à noter que d'autres modes de réalisation dans lesquels le réservoir 75, l'organe de collecte 70 et l'organe de protection 80 sont configurés pour que le flux d'air de collecte traverse le liquide L sont envisageables.

Par exemple, la barrière 105 comporte une grille interposée entre le liquide L et la sortie 110, la grille délimitant des ouvertures comprises entre 0,5 mm² et 2 mm². Il n'est alors pas nécessaire que la barrière 105 délimite un passage 125 puisque la grille peut être traversée par le flux d'air de collecte tout en bloquant le passage de gouttes ou de projections causées par des remous dans le réservoir 75. De plus la présence d'une barrière 106 en plus de la barrière 105 permet d'améliorer le confinement du liquide L pour que celui-ci n'atteigne pas la sortie 110.

Dans ce cas, la barrière 105 est notamment horizontale lorsque le véhicule 10 est en fonctionnement. En variante, la grille obture partiellement la sortie 110, par exemple en étant fixée à la face supérieure 108.

Un deuxième exemple de véhicule 10 va maintenant être décrit. Les élements identiques au premier exemple ne sont pas décrits à nouveau. Seules les différences sont mises en évidence.

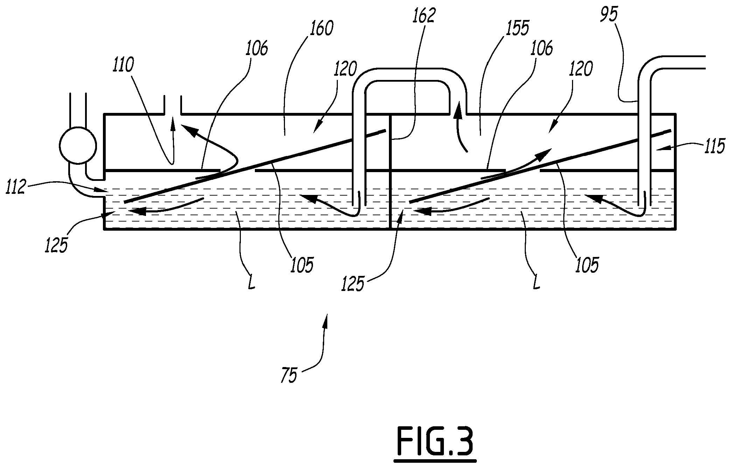

Le dispositif de collecte 25 du deuxième exemple est représenté sur la figure 3.

Le réservoir 75 comporte une pluralité de chambres distinctes, par exemple deux chambres 155 et 160. Chaque chambre est, par exemple, délimitée par un boîtier 100 respectif.

En variante, au moins deux chambres 155, 160 sont délimitées par un même boîtier 100, comme c'est le cas sur la figure 3. Dans ce cas, le boîtier 100 comporte, par exemple, une paroi 162, notamment verticale, séparant les deux chambres l'une de l'autre.

Chaque chambre 155, 160 contient du liquide L, de manière similaire au premier exemple de la figure 2.

Chaque chambre 155, 160 est, par exemple, séparée en deux compartiments 115, 120 par une barrière 105, et contient optionnellement une barrière 106.

L'organe de collecte 70 est configuré pour injecter le flux d'air de collecte dans le premier compartiment 115 la chambre 155.

La sortie 110 relie le deuxième compartiment 120 de la chambre 160 au condenseur 130.

L'ouverture de retour 112 relie le conduit de retour 135 à la chambre 160.

Le deuxième compartiment 120 de la chambre 155 est relié par un conduit de liaison 165 au premier compartiment 115 de la chambre 160.

Le conduit de liaison 165 est, notamment, configuré pour injecter le flux d'air de collecte dans le liquide L contenu dans le premier compartiment 115 de la chambre 160.

Lors de la circulation du flux d'air de collecte à travers le réservoir 75, le flux d'air de collecte est injecté par l'organe de collecte 70 dans le liquide L contenu dans le premier compartiment 115 de la chambre 155.

Le flux d'air de collecte traverse ensuite successivement le passage 125 et le deuxième compartiment 120 de la chambre 155 et le conduit de liaison 165, est injecté ensuite par le conduit de liaison 165 dans le liquide L contenu dans le premier compartiment 115 de la chambre 160 et traverse le passage 125 et le deuxième compartiment 120 de la chambre 160 pour rejoindre la sortie 110.

Le deuxième exemple de dispositif de collecte 25 permet de concentrer la majorité des particules collectées dans le liquide L contenu dans la chambre 155. Il est donc moins souvent nécessaire de remplacer le liquide L de la chambre 160, et les quantités de liquide L consommées lors de l'utilisation du véhicule 10 sont donc réduites par rapport au premier exemple.

En variante ou en complément, l'un ou l'autre des exemples précédents de dispositif de collecte 25 comporte plusieurs organes de collecte 70, par exemple associés chacun à un emplacement distinct du véhicule 10, notamment associés chacun à un disque 40 respectif et/ou à une ou des plaquette(s) distincte(s).

## Revendications

1. Véhicule (10) de transport en commun comportant un dispositif d'aspiration et un dispositif (25) de collecte de particules en suspension, le dispositif de collecte (25) étant configuré pour collecter des particules en suspension résultant de l'usure d'un disque (40) et/ou d'une plaquette (60) lorsque la plaquette (60) frotte contre le disque (40) émises lors d'un freinage du véhicule (10), **caractérisé en ce que** le dispositif (25) comporte un organe de collecte (70), un réservoir (75) et un organe de protection (80), le réservoir (75) étant configuré pour contenir un liquide (L), l'organe de collecte (70) étant configuré pour conduire un flux d'air contenant les particules depuis l'extérieur du dispositif de collecte (25) jusqu'à l'intérieur du réservoir (75), le flux d'air traversant successivement l'organe de collecte (70), le réservoir (75) et l'organe de protection (80), l'organe de collecte (70), le réservoir (75) et l'organe de protection (80) étant configurés pour que le flux d'air traverse le liquide (L), l'organe de protection (80) étant relié à une sortie (110) du réservoir (75), la sortie (110) étant disposée au-dessus du niveau du liquide (L) dans le réservoir (75), le réservoir (75) comprenant, en outre, une barrière (105) configurée pour empêcher des projections du liquide (L) d'atteindre la sortie (110) du réservoir (75), la barrière (105) étant configurée pour permettre au flux d'air de traverser le réservoir (75) depuis l'organe de collecte (70) jusqu'à la sortie (110),
l'organe de protection (80) étant configuré pour être relié à un dispositif d'aspiration (65) propre à générer le flux d'air, l'organe de protection (80) étant configuré pour conduire le flux depuis la sortie (110) du réservoir (75) jusqu'au dispositif d'aspiration (65), l'organe de protection (80) comportant un condenseur (130) configuré pour condenser une vapeur du liquide (L) présente dans le flux d'air et pour conduire le condensat généré depuis le condenseur (130) jusqu'au réservoir (75).

2. Véhicule selon la revendication 1, dans lequel le réservoir (75) comporte, en outre, une ouverture (112) de retour du condensat, l'ouverture de retour (112) étant distincte de la sortie (110), l'organe de protection (80) comportant un conduit de retour (135) configuré pour conduire le condensat jusqu'au réservoir (75) via l'ouverture de retour (112).

3. Véhicule selon la revendication 2, dans lequel le conduit de retour (135) comporte un clapet (150) configuré pour empêcher un fluide de circuler depuis le réservoir (75) jusqu'au condenseur (130) dans le conduit de retour (135).

4. Véhicule selon l'une quelconque des revendications 1 à 3, dans lequel l'organe de protection (80) comporte, en outre, un filtre (140) configuré pour retenir des particules présentes dans le flux d'air, le filtre (140) étant interposé entre le condenseur (130) et le dispositif d'aspiration (65) lorsque l'organe de protection est connecté au dispositif d'aspiration (65).

5. Véhicule selon l'une quelconque des revendications 1 à 4, dans lequel la barrière (105) comporte une grille, la grille délimitant notamment des ouvertures présentant une aire comprise entre 0,5 millimètre carré et 2 millimètres carrés.

6. Véhicule selon l'une quelconque des revendications 1 à 5, dans lequel la barrière (105) divise une chambre du réservoir (75) en un premier compartiment (115) et un deuxième compartiment (120), le premier compartiment (115) étant configuré pour accueillir le liquide (L), la sortie (110) débouchant dans le deuxième compartiment (120), la barrière (105) délimitant un passage (125) reliant le premier compartiment (115) au deuxième compartiment (120) et configuré pour être traversé par le flux d'air.

7. Véhicule selon l'une quelconque des revendications 1 à 6, dans lequel l'organe de protection (80) comporte un conduit d'aspiration (85) destiné à relier l'organe de protection (80) au dispositif d'aspiration (65), le conduit d'aspiration (85) comportant un clapet configuré pour empêcher un flux d'air de circuler à travers le clapet depuis le dispositif d'aspiration (65) jusqu'à l'organe de protection (80).

8. Véhicule selon l'une quelconque des revendications 1 à 7, dans lequel le liquide (L) est une solution aqueuse, la solution contenant notamment un tensio-actif.

9. Véhicule selon l'une quelconque des revendications 1 à 8, dans lequel le réservoir (75) comporte au moins deux chambres (155,160) connectées en série, chaque chambre (155, 160) contenant du liquide (L), l'organe de collecte (70) étant configuré pour injecter le flux d'air de collecte dans le liquide (L) contenu dans l'une des chambres (155), la sortie (110) débouchant dans une autre chambre (160).

10. Véhicule (10) selon l'une quelconque des revendications 1 à 9, comportant un circuit pneumatique (45) et un frein (50), le circuit pneumatique (45) étant configuré pour commander un freinage du véhicule (10) par le frein (50), le dispositif d'aspiration (65) étant configuré pour être actionné par le circuit pneumatique (45).

## Patentansprüche

1. Öffentliches Transportfahrzeug (10), umfassend eine Ansaugvorrichtung und eine Sammelvorrichtung (25) für Schwebstoffe, wobei die Sammelvorrichtung (25) dazu eingerichtet ist, Schwebstoffe zu sammeln, welche aus der Abnutzung einer Scheibe (40) und/oder einer Platte (60) resultieren, wenn die Platte (60) gegen die Scheibe (40) reibt, welche während eines Bremsens des Fahrzeugs (10) abgegeben werden, **dadurch gekennzeichnet, dass** die Vorrichtung (25) ein Sammelelement (70), einen Behälter (75) und ein Schutzelement (80) umfasst, wobei der Behälter (75) dazu eingerichtet ist, eine Flüssigkeit (L) zu enthalten, das Sammelelement (70) dazu eingerichtet ist, einen Luftstrom, welcher die Stoffe enthält, von der Außenseite der Sammelvorrichtung (25) bis zu der Innenseite des Behälters (75) zu führen, wobei der Luftstrom aufeinander folgend das Sammelelement (70), den Behälter (75) und das Schutzelement (80) durchläuft, wobei das Sammelelement (70), der Behälter (75) und das Schutzelement (80) so eingerichtet sind, dass der Luftstrom die Flüssigkeit (L) durchläuft, wobei das Schutzelement (80) mit einem Ausgang (110) des Behälters (75) verbunden ist, wobei der Ausgang (110) oberhalb des Pegels der Flüssigkeit (L) in dem Behälter (75) angeordnet ist, wobei der Behälter (75) ferner eine Barriere (105) umfasst, welche dazu eingerichtet ist, Spritzer der Flüssigkeit (L) daran zu hindern, den Ausgang (110) des Behälters (75) zu erreichen, wobei die Barriere (105) dazu eingerichtet ist, es dem Luftstrom zu erlauben, den Behälter (75) von dem Sammelelement (70) bis zu dem Ausgang (110) zu durchlaufen,
wobei das Schutzelement (80) dazu eingerichtet ist, mit einer Ansaugvorrichtung (65) verbunden zu sein, welche dazu in der Lage ist, den Luftstrom zu erzeugen, wobei das Schutzelement (80) dazu eingerichtet ist, den Strom von dem Ausgang (110) des Behälters (75) bis zu der Ansaugvorrichtung (65) zu führen, wobei das Schutzelement (80) einen Kondensator (130) umfasst, welcher dazu eingerichtet ist, einen Dampf der Flüssigkeit (L), welcher in dem Luftstrom vorliegt, zu kondensieren, und das erzeugte Kondensat von dem Kondensator (130) bis zu dem Behälter (75) zu führen.

2. Fahrzeug nach Anspruch 1, wobei der Behälter (75) ferner eine Rückführöffnung (112) für das Kondensat umfasst, wobei die Rückführöffnung (112) von dem Ausgang (110) verschieden ist, wobei das Schutzelement (80) eine Rückführleitung (135) umfasst, welche dazu eingerichtet ist, das Kondensat bis zu dem Behälter (75) mittels der Rückführöffnung (112) zu führen.

3. Fahrzeug nach Anspruch 2, wobei die Rückführleitung (135) ein Ventil (150) umfasst, welches dazu eingerichtet ist, ein Fluid daran zu hindern, von dem Behälter (75) bis zu dem Kondensator (130) in der Rückführleitung (135) zu zirkulieren.

4. Fahrzeug nach einem der Ansprüche 1 bis 3, wobei das Schutzelement (80) ferner einen Filter (140) umfasst, welcher dazu eingerichtet ist, Stoffe zurückzuhalten, welche in dem Luftstrom vorliegen, wobei der Filter (140) zwischen dem Kondensator (130) und der Ansaugvorrichtung (65) eingefügt ist, wenn das Schutzelement mit der Ansaugvorrichtung (65) verbunden ist.

5. Fahrzeug nach einem der Ansprüche 1 bis 4, wobei die Barriere (105) ein Gitter umfasst, wobei das Gitter insbesondere Öffnungen begrenzt, welche eine Größe aufweisen, welche zwischen 0,5 Quadratmillimeter und 2 Quadratmillimeter beträgt.

6. Fahrzeug nach einem der Ansprüche 1 bis 5, wobei die Barriere (105) eine Kammer des Behälters (75) in ein erstes Fach (115) und ein zweites Fach (120) unterteilt, wobei das erste Fach (115) dazu eingerichtet ist, die Flüssigkeit (L) aufzunehmen, wobei der Ausgang (110) in dem zweiten Fach (120) mündet, wobei die Barriere (105) einen Durchgang (125) begrenzt, welcher das erste Fach (115) mit dem zweiten Fach (120) verbindet und dazu eingerichtet ist, von dem Luftstrom durchlaufen zu werden.

7. Fahrzeug nach einem der Ansprüche 1 bis 6, wobei das Schutzelement (80) eine Ansaugleitung (85) umfasst, welche dazu vorgesehen ist, das Schutzelement (80) mit der Ansaugvorrichtung (65) zu verbinden, wobei die Ansaugleitung (85) ein Ventil umfasst, welches dazu eingerichtet ist, einen Luftstrom daran zu hindern, das Ventil von der Ansaugvorrichtung (65) bis zu dem Schutzelement (80) zu durchlaufen.

8. Fahrzeug nach einem der Ansprüche 1 bis 7, wobei die Flüssigkeit (L) eine wässrige Lösung ist, wobei die Lösung insbesondere ein Tensid enthält.

9. Fahrzeug nach einem der Ansprüche 1 bis 8, wobei der Behälter (75) wenigstens zwei Kammern (155, 160) umfasst, welche in Reihe verbunden sind, wobei jede Kammer (155, 160) Flüssigkeit (L) enthält, wobei das Sammelelement (70) dazu eingerichtet ist, den Sammel-Luftstrom in die Flüssigkeit (L) einzugeben, welche in einer der Kammern (155) enthalten ist, wobei der Ausgang (110) in der anderen Kammer (160) mündet.

10. Fahrzeug (10) nach einem der Ansprüche 1 bis 9, umfassend eine pneumatische Leitung (45) und eine Bremse (50), wobei die pneumatische Leitung (45) dazu eingerichtet ist, ein Bremsen des Fahrzeugs (10) durch die Bremse (50) anzuweisen, wobei die Ansaugvorrichtung (65) dazu eingerichtet ist, durch die pneumatische Leitung (45) betätigt zu werden.

## Claims

1. Public transport vehicle (10) including a suction device and a device (25) for collecting suspended particles, the collection device (25) being configured to collect suspended particles which result from the wear of a disc (40) and/or a pad (60) when the pad (60) rubs against the disc (40) and which are emitted during braking of the vehicle (10), **characterised in that** the device (25) includes a collection member (70), a tank (75) and a protection member (80), the tank (75) being configured to contain a liquid (L), the collection member (70) being configured to conduct an air flow containing the particles from the outside of the collection device (25) to the inside of the tank (75), the air flow successively passing through the collection member (70), the tank (75) and the protection member (80), the collection member (70), the tank (75) and the protection member (80) being configured for the air flow to pass through the liquid (L), the protection member (80) being connected to an outlet (110) of the tank (75), the outlet (110) being disposed above the level of the liquid (L) in the tank (75), the tank (75) further comprising a barrier (105) configured to prevent projections of the liquid (L) from reaching the outlet (110) of the tank (75), the barrier (105) being configured to allow the air flow to pass through the tank (75) from the collection member (70) to the outlet (110),
the protection member (80) being configured to be connected to a suction device (65) suitable for generating the air flow, the protection member (80) being configured to conduct the flow from the outlet (110) of the tank (75) to the suction device (65), the protection member (80) including a condenser (130) configured to condense a vapour of the liquid (L) present in the air flow and to conduct the condensate generated from the condenser (130) to the tank (75).

2. Vehicle according to claim 1, wherein the tank (75) further includes a condensate return opening (112), the return opening (112) being distinct from the outlet (110), the protection member (80) comprising a return duct (135) configured to conduct the condensate to the tank (75) via the return opening (112).

3. Vehicle according to claim 2, wherein the return duct (135) includes a valve (150) configured to prevent a fluid from flowing from the tank (75) to the condenser (130) in the return duct (135).

4. Vehicle according to any one of claims 1 to 3, wherein the protection member (80) further comprises a filter (140) configured to retain particles present in the air flow, the filter (140) being interposed between the condenser (130) and the suction device (65) when the protection member is connected to the suction device (65).

5. Vehicle according to any one of claims 1 to 4, wherein the barrier (105) includes a grid, the grid delimiting in particular openings having an area between 0.5 square millimetres and 2 square millimetres.

6. Vehicle according to any one of claims 1 to 5, wherein the barrier (105) divides a chamber of the tank (75) into a first compartment (115) and a second compartment (120), the first compartment (115) being configured to accommodate the liquid (L), the outlet (110) opening into the second compartment (120), the barrier (105) delimiting a passage (125) connecting the first compartment (115) to the second compartment (120) and is configured to be passed through by the air flow.

7. Vehicle according to any one of claims 1 to 6, wherein the protection member (80) includes a suction duct (85) intended to connect the protection member (80) to the suction device (65), the suction duct (85) comprising a valve configured to prevent an air flow from circulating through the valve from the suction device (65) to the protection member (80).

8. Vehicle according to any one of claims 1 to 7, wherein the liquid (L) is an aqueous solution, the solution containing in particular a surfactant.

9. Vehicle according to any one of claims 1 to 8, wherein the tank (75) comprises at least two chambers (155, 160) connected in series, each chamber (155, 160) containing liquid (L), the collection member (70) being configured to inject the collection air flow into the liquid (L) contained in one of the chambers (155), the outlet (110) opening into another chamber (160).

10. Vehicle (10) according to any one of claims 1 to 9, including a pneumatic circuit (45) and a brake (50), the pneumatic circuit (45) being configured to control braking of the vehicle (10) by the brake (50), the suction device (65) being configured to be actuated by the pneumatic circuit (45).
